# EUROPÄISCHE PATENTSCHRIFT

(11) **EP 2 418 468 B1**
(45) Veröffentlichungstag und Bekanntmachung des Hinweises auf die Patenterteilung: **29.03.2017**
(21) Anmeldenummer: 11006536.4
(22) Anmeldetag: 09.08.2011
(51) Int. Cl.: F02P 19/02, F23Q 7/00, G01L 23/22

(54) **Glühkerzenstecker ohne zentralen Hochstromkontakt**
Glow plug finger without central high current contact
Tige de bougie de préchauffage sans contact à haute courant central

(30) Priorität: 10.08.2010 DE 102010033950
(43) Veröffentlichungstag der Anmeldung: 15.02.2012
(73) Patentinhaber: Hirschmann Automotive GmbH, 6830 Rankweil-Brederis (AT)
(72) Erfinder: Siegl, Crispin, 6571 Strengen (AT); Bischof, Markus, 6824 Schlins (AT)
(74) Vertreter: Greif, Thomas

(56) Entgegenhaltungen:
- DE-A1-102007 002 942
- DE-A1-102007 031 401
- US-B1- 6 193 528

## Beschreibung

Die Erfindung betrifft einen Glühkerzenstecker für eine einen Hochstromanschluss aufweisende Glühkerze mit eingebautem Sensor, gemäß den Merkmalen des Oberbegriffes des Patentanspruches 1.

Aus der gattungsbildenden DE 10 2004 002 905 A1 ist ein Glühkerzenstecker für eine Glühkerze mit eingebautem Sensor, insbesondere einem eingebauten Drucksensor, bekannt. Dieser Glühkerzenstecker weist ein Gehäuse aus einem elektrisch isolierenden Material auf, das auf die Glühkerze aufsetzbar ist. Mittig in dem Gehäuse ist ein Hochstromamschluss zur Erzeugung der Glühfunktion der Glühkerze angeordnet, der bei aufgesetztem Stecker mit dem Hochstromkontakt der Heizeinrichtungen der Glühkerze verbunden ist. Weiterhin sind Sensorkontakte vorhanden, die gegenüber dem Hochstromanschluss isoliert in oder an dem Gehäuse vorgesehen sind und bei auf die Glühkerze aufgesetztem Stecker mit deren Sensoranschlüssen verbunden sind.

Dieser Glühkerzenstecker für eine Glühkerze hat zunächst den Vorteil, dass sowohl der Hochstromanschluss als auch die Sensorkontakte in dem Gehäuse des Glühkerzensteckers angeordnet sind. Daraus resultiert der Vorteil, dass mit aufsetzen des Glühkerzensteckers auf die Glühkerze die einander korrespondierenden Kontakte miteinander kontaktiert werden, sodass ein einfacher Aufsetzvorgang bei gleichzeitiger Kontaktierung realisiert Ist. In der Zwischenzeit hat sich in der Praxis jedoch herausgestellt, dass über die Lebensdauer der Glühkerze und dem zugehörigen Glühkerzenstecker diese zentrale Anordnung des Hochstromanschlusses nicht von Vorteil ist, da sich die Sensorkontakte und der Hochstromanschluss funktional gegenseitig im Betrieb beeinflussen. Außerdem lassen es die Einbauverhältnisse der Glühkerzen in modernen Brennkraftmaschinen heutzutage zu, dass der Hochstromanschluss der Glühkerze nicht mehr längs ihrer Längsachse, das heißt zentral, herausgeführt werden muss, sondern auch an einer anderen, das heißt abeichenden Stelle aus der Glohkerze herausgeführt werden kann.

Weitere Glühkerzenstecker sind aus DE 10 2007 002 942 A1 und US 6193528 B1 bekannt.

Daher liegt der Erfindung zugrunde, einen Glühkerzenstecker für eine Glühkerzen einer Brennkraftmaschine bereitzustellen, der den eingangs geschilderten Anforderungen gerecht wird.

Diese Auflage ist durch die Merkmale des Patentanspruches 1 gelöst.

Erfindungsgemäß ist vorgesehen, dass das Gehäuse des Glühkerzensteckers einen mittig In der Längsachse des Gehäuses angeordneten und verlaufenden Führungsdom aus einem elektrisch isolierenden Material aufweist. Dadurch ist der Vorteil gegeben, dass der Hochstromanschluss der Glühkerze an einer anderen Stelle als der mittig in der Längsachse der Glühkerze verlaufenden Position angeordnet werden kann und mit einem separatem Steckverbinder für diesen Hochstromanschluss verbunden werden kann. Gleichzeitig wird durch den Führungedom sichergestellt, dass der Glühkerzenstecker beim Aufstecken auf die Glühkerze geführt und seine endgültige Position zwecks Kontaktlerung der korrespondierenden Sensorkontakte gewährleistet und sichergestellt ist. Je nach Ausgestaltung des Führungsdomes Ist es alternativ oder ergänzend zur Führungsfunktion beim Aufsetzen des Glühkerzenstecker auf die Glühkerze denkbar, dass der Führungsdom einen mittig in der Längsachse der Glühkerze verlaufenden Hochstromanschluss dennoch aufnimmt und separat zu dem zuvor beschriebenen Glühkerzenstecker mit einem weiteren Hochstromsteckverbinder kontaktiert wird. Dies erhöht die Flexibilität bei dem Anschluss von Steckverbindungen bzw, eines Steckverbinders an eine Glühkerze einer Brennkraftmaschine.

In Weiterbildung der Erfindung ist der Führungsdom aus dem gleichen elektrisch isolierenden Material gebildet wie das Gehäuse des Glühkerzensteckers. Dabei kann es sich in einer weiteren Ausgestaltung der Erfindung bei dem Führungsdom aus dem gleichen elektrisch isolierenden Material um ein separates Bauteil handeln, welches in das Gehäuse des Glühkerzensteckers eingesetzt wird. Dieses Einsetzen kann beispielsweise durch Verstemmen, Einklipsen, Verkleben, Verschweißen oder dergleichen erfolgen, wobei diese Aufzählung nicht abschließend ist. Die Ausgestaltung des Führungsdomes als separates Bauteil hat den Vorteil, dass bei einem Grundgehäuse, welches für alle Glühkerzenstecker immer gleich Ist, verschiedene Geometrien des Führungsdomes separat realisiert werden können, sodass eine hohe Flexibilität für den Einsatz des Glühkerzensteckers gegeben Ist.

Alternativ dazu ist es möglich, dass das Gehäuse des Glühkerzensteckers und dessen Führungsdom als einstöckiges Bauteil ausgebildet sind. Hierbei ist es zwar erforderlich, für unterschiedliche Geometrien des Führungsdomes auch unterschiedliche Werkzeuge zur Herstellung des Gehäuses vorzusehen. Jedoch ist durch diese einstückige Bauweise der Vorteil gegeben, dass eine hohe Stabilität des Gehäuses und damit eine hohe Betriebssicherheit über die Lebenszeit des Glühkerzensteckers realisierbar ist. Außerdem entfällt in dieser Ausgestaltung ein zusätzlicher Montageschritt, nämlich der des Einsetzens des separaten Führungsdomes in das Gehäuse.

In einer weiteren Ausgestaltung besteht der Führungsdom aus einem anderen isolierenden Material als das Material des Gehäuses. Auch hier Ist denkbar, dass der Führungsdom aus dem von dem Gehäusematerial abweichenden Material mit dem Gehäuse einstückig hergestellt oder eine separates Bauteil wird, das in das Gehäuse wie zuvor schon beschrieben eingesetzt wird. Wenn der Führungsdom aus unterschiedlichem Material ein einstückiges Bauteil mit dem Gehäuse bildet, wird in bevorzugter Weise Zwelkomponenten-Spritzgussverfahren eingesetzt. Dabei wird zum Beispiel in einem ersten Herstellungsschritt In einem Kunststoff-Spritzgussverfahren das Gehäuse des Glühkerzensteckers hergestellt und in dem gleichen Werkzeug unter Wegnahme eines Einsatzes, das den Führungsdom abbildet, ein anderes Kunststoffmaterial eingespritzt, um so den Führungsdom herzustellen.

Bei den zuvor beschriebenen Varianten wird in bevorzugter Weise zur Herstellung des Gehäuses einschließlich integriertem Führungsdom oder zur Herstellung des Gehäuses mit separat davon hergestelltem Führungsdom ein grundsätzlich bekanntes Kunststoff-Spritzgussverfahren angewendet. Die verwendeten Kunststoffmaterialien (bei unterschiedlichen Materialien) oder das einzige Kunststoffmaterial (wenn Führungsdom und Gehäuse aus gleichem Material bestehen) richten sich hinsichtlich ihrer Materialeigenschaften nach dem Einsetzzweck und sind insbesondere beständig gegen hohe Temperaturen, Vibrationen, Verschmutzungen (wie beispielsweise Salzwasser, Motoröl oder dergleichen) und darüber hinaus dauerhaltbar über die Lebenszeit des Glühkerzenstecker.

In Welterbildung der Erfindung weist der Führungsdom auf einer Steckseite des Glühkerzensteckers einen Zylinderabschnitt auf. Dieser Zylinderabschnitt, der koaxial um die Längsachse des Glühkerzensteckers ausgebildet ist, ist in Richtung der Längsachse durchgängig, sodass er, falls erforderlich, einen Hochstromanschluss der Glühkerze aufnehmen kann. Zu diesem Zweck ist der Zylinderabschnitt, genauer seine Geometrie, der Geometrie des aufzunehmenden Hochstromkontaktes Glühkerze angepasst. Weiterhin Ist ergänzend oder alternativ vorgesehen, dass der Führungsdom auf einer Abgangsseite des Glühkerzensteckers als Durchgangsöffnung ausgebildet ist. Diese Durchgangsöffnung ermöglicht es alleine oder in Zusammenhang mit dem Zylinderabschnitt, einen in das Gehäuse des Glühkerzensteckers eingeführten Hochstromanschluss durch das Gehäuse zu führen, um es mit einem separaten korrespondierenden Steckverbinder für den Hochstromanschluss kontaktieren zu können.

Insgesamt bietet der zuvor beschriebene Führungsdom als den Verteil, dass er unter Weglassung eines Hochstromkontaktes des Glühkerzensteckers eine Führungsfunktion und damit eine erhöhte Stabilität bei der Lagefixierung übernimmt, wenn der Glühkerzenstecker auf die Glühkerze aufgesteckt ist. Ergänzend oder Alternativ kann der Führungsdom auch so gestaltet sein, dass beim Aufstecken des Glühkerzensteckers (ohne Hochstromanschluss) ein Hochstromkontakt der Glühkerze durch diesen Führungsdom hindurchgeführt wird, damit der mit einem separatem Steckverbinder verbunden werden kann. Dabei ist es weiterhin denkbar, dass das Gehäuse des Glühkerzensteckers und der zusätzliche Steckverbinder in ihrer Geometrie, mit der sie einander zuweisen, so gestaltet sind, dass sie nach ihrem Aufstecken auf die Glühkerze miteinander in Wirkverbindung gebracht sind, um damit einen Anschluss an die Glühkerze sowohl bezüglich der Heizfunktion als auch bezüglich der Sensorfunktion zu realisieren.

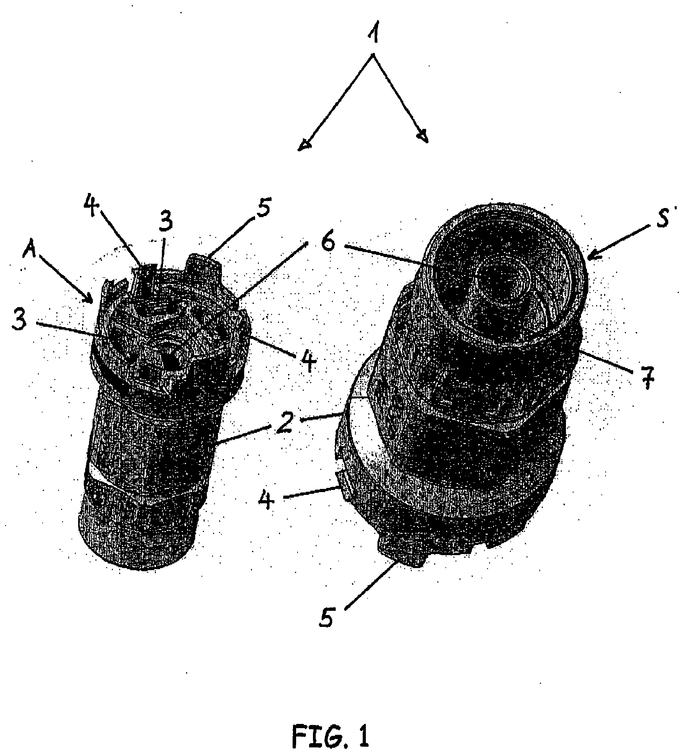

Ein Ausführungebelspiel einer erfindungsgemäßen Glühkerze ist in der Figur 1 dargeatellt.

Figur 1 zeigt, soweit im Einzelnen dargestellt, zwei unterschiedliche Ansichten eines Glühkerzensteckers 1 der Gehäuse 2 aufweist. Dieses Gehäuse 2 besteht aus einem elektrisch isolierenden Material. Das Gehäuse 2 wird insbesondere in einem Kunststoff-Spritzgussverfahren hergestellt. In oder an dem Gehäuse 2 sind ein Sensorkontakt 3, vorzugsweise mehrere Sensorkontakte 3, angeordnet. Die Sensorkontakte 3 sind koaxial zu der Längsachse des Glühkerzensteckers 1 bzw. dessen Gehäuse 2 herum auf einer Kreisbahn angeordnet. Das Gehäuse 2 bzw. der Glühkerzenstecker 1 weist eine Steckseite S und einen Abgangsseite A auf. Mit der Steckseite S wird der fertige Glühkerzenstecker 1 auf die hier nicht dargestellte Steckseite der Glühkerze aufgesteckt. Auf der Abgangsseite A ragen die Sensorkontakte 3 heraus und können mit einem weiteren Steckverbinder bzw. einem Sensorkabel verbunden werden. Bezüglich des Aufbaues des Glühkerzensteckers 1 mit seinen Sensorkontakten 3 wird auf die Figuren 1 bis 3 nebst zugehöriger Beschreiben der DE 10 2004 002 905 A1 (allerdings unter Weglassung des Hochstromanachlusses) verwiesen. Das heißt, dass die Sensorkontakte 3, wie sie in Figur 1 dargestellt sind, von der Abgangsseite A bis in Richtung der Steckseite S reichen, damit mittels des Glühkerzensteckers 1 eine Verbindung für die Sensorsignale zwischen den Sensoren der Glühkerze und einem nachgeschalteten Auswertegerät hergestellt werden kann. Um auf der Abgangsseite A einen korrespondierenden Steckverbinder aufsetzen zu können, sind bei diesem Ausführungsbeispiel Rasthaken 4 und Führungselemente 5 vorhanden, die aber nicht vorhanden sein müssen.

Erfingdungsgemäß weist das Gehäuse 2, wie es in Figur 1 dargestellt ist, einen Führungsbogen 6 auf. Bei diesem Ausführungsbeispiel ist der Führungsbogen 6 einstückig mit dem Gehäuse 2 gebildet. Er kann allerdings auch als separates Bauteil hergestellt und in das Gehäuse 2 eingesetzt werden. Auf der Steckseite S weist der Führungsbogen 6 einen Zylinderabschnitt 7 auf. Auf der Abgangsseite A ist der Führungsdom 6 als Durchgangsöffnung gebildet. Bei dieser Ausgestaltung ist es möglich, durch den innen hohlen Führungsdom 6 einen Hochstromkontakt der Glühkerze durchzuführen und mit einem weiteren Steckverbinder zu kontaktieren, sofem die Glühkerze einen zentralen in der Längsachse verlaufenden Hochstromanschluss aufweist. Ansonsten kann der innen hohle Führungsdom 6 auch leer bleiben. Alternativ dazu Ist es denkbar, den Führungsdom 6, insbesondere dessen Zylinderabschnitt 7 massiv auszugestalten, wenn er keinen Hochstromkontakt der Glühkerze aufnehmen soll.

Der zylinderförmige Führungsdom 6, insbesondere der Zylinderabschnitt 7, ist auf der Steckseite S koaxial von einer Gehäusewand des Gehäuses 2 umlaufend umgeben. Durch diese Geometrie auf der Steckseite S des Glühkerzensteckers 1 ist ein einfaches, schnelles und zielgerichtetes Aufsetzen des Glühkerzensteckers 1 mit seiner Steckseite S auf die korrespondierende Steckseite der Glühkerze möglich. Um beim Aufstecken, das heißt bei der ersten Berührung, eine zielgerichtete Führung einzuleiten, sind die umlaufende Endkante des Zylinderabschnittes 7 und/oder die die umlaufende Endkante der äußerten Wand des Gehäuses 2 angefast.

### Bezugszeichenliste

- 1.: Glühkerzenstecker
- 2.: Gehäuse
- 3.: Sensorkontakte
- 4.: Rasthaken
- 5.: Führungselement
- 6.: Führungsdom
- 7.: Zylinderabschnitt

- S:: Steckseite
- A:: Abgangsseite

## Patentansprüche

1. Glühkerzenstecker (1) für eine einen Hochstromanschluss aufweisende Glühkerze mit eingebautem Sensor, insbesondere eingebautem Drucksensor, aufweisend ein Gehäuse (2) aus einem elektrisch isolierenden Material, das auf die Glühkerze aufsetzbar ist, wobei in oder an dem Gehäuse (2) koaxial um die Längsache des Gehäuses (2) Sensorkontakte vorgesehen und bei auf die Glühkerze aufgesetztem Stecker mit den Sensoranschlüssen der Glühkerze verbunden sind, wobei das Gehäuse (2) einen mittig in der Längsachse des Gehäuses (2) angeordneten und verlaufenden Führungsdom (6) aus einem elektrisch isolierenden Material aufweist und der Führungsdom (6) auf einer Steckseite (S) des Glühkerzensteckers (1) einen Zylinderabschnitt (7) aufweist, **dadurch gekennzeichnet, dass** der Führungsdom (6) auf einer Abgangseite (A) des Glühkerzensteckers (1) als Durchgangsöffnung ausgebildet ist.

2. Glühkerzenstecker (1) nach Anspruch 1, **dadurch gekennzeichnet, dass** der Führungsdom (6) aus dem gleichen elektrisch isolierenden Material gebildet ist wie das Gehäuse (2).

3. Glühkerzenstecker (1) nach Anspruch 1, **dadurch gekennzeichnet, dass** der Führungsdom (6) aus einem anderen elektrisch isolierenden Material gebildet ist wie das Gehäuse (2).

4. Glühkerzenstecker (1) nach Anspruch 1, 2 oder 3, **dadurch gekennzeichnet, dass** der Führungsdom (6) einstückig mit dem Gehäuse (2) ausgestaltet ist.

5. Glühkerzenstecker (1) nach Anspruch 1, 2 oder 3, **dadurch gekennzeichnet, dass** der Führungsdom (6) separat zu dem Gehäuse (2) ausgestaltet und dort eingesetzt ist.

6. Glühkerzenstecker (1) nach einem der vorhergehenden Ansprüche, **dadurch gekennzeichnet, dass** der Glühkerzenstecker (1) als Kunststoffspritzgussteil gebildet ist.

## Claims

1. Glow plug connector (1) for a glow plug which has a high-current connection and an incorporated sensor, in particular an incorporated pressure sensor, having a housing (2) which is composed of an electrically insulating material and can be placed onto the glow plug, wherein sensor contacts are provided in or on the housing (2) coaxially around the longitudinal axis of the housing (2) and, when the connector is placed onto the glow plug, are connected to the sensor connections of the glow plug, wherein the housing (2) has a guide dome (6) which is arranged and runs centrally in the longitudinal axis of the housing (2), and the guide dome (6) has a cylindrical section (7) on a connection side (S) of the glow plug connector (1), **characterized in that** the guide dome (6) is formed on an output side (A) of the glow plug connector (1) as a passage opening.

2. Glow plug connector (1) according to Claim 1, **characterized in that** the guide dome (6) is formed from the same electrically insulating material as the housing (2).

3. Glow plug connector (1) according to Claim 1, **characterized in that** the guide dome (6) is formed from a different electrically insulating material than the housing (2).

4. Glow plug connector (1) according to Claim 1, 2 or 3, **characterized in that** the guide dome (6) is integrally designed with the housing (2).

5. Glow plug connector (1) according to Claim 1, 2 or 3, **characterized in that** the guide dome (6) is designed separately from the housing (2) and is inserted into said housing.

6. Glow plug connector (1) according to one of the preceding claims, **characterized in that** the glow plug connector (1) is formed as an injection-moulded plastic part.

## Revendications

1. Fiche de bougie de préchauffage (1) pour une bougie de préchauffage dotée d'une borne à courant fort avec capteur intégré, notamment capteur de pression intégré, comprenant un boîtier (2) en matériau électriquement isolant qui peut être monté sur la bougie de préchauffage, des contacts de capteur se trouvant dans ou sur le boîtier (2) de manière coaxiale autour de l'axe longitudinal du boîtier (2) et étant reliés aux bornes de capteur de la bougie de préchauffage lorsque la fiche est montée sur la bougie de préchauffage, le boîtier (2) possédant une broche de guidage (6) en un matériau électriquement isolant qui est disposé et s'étend au centre dans l'axe longitudinal du boîtier (2), et la broche de guidage (6) possédant une portion cylindrique (7) sur un côté d'enfichage (S) de la fiche de bougie de préchauffage (1), **caractérisée en ce que** la broche de guidage (6) est réalisée sous la forme d'une ouverture de passage sur un côté de départ (A) de la fiche de bougie de préchauffage (1).

2. Fiche de bougie de préchauffage (1) selon la revendication 1, **caractérisée en ce que** la broche de guidage (6) est constituée du même matériau électriquement isolant que le boîtier (2).

3. Fiche de bougie de préchauffage (1) selon la revendication 1, **caractérisée en ce que** la broche de guidage (6) est constituée d'un autre matériau électriquement isolant que le boîtier (2).

4. Fiche de bougie de préchauffage (1) selon la revendication 1, 2 ou 3, **caractérisée en ce que** la broche de guidage (6) est réalisée d'un seul tenant avec le boîtier (2).

5. Fiche de bougie de préchauffage (1) selon la revendication 1, 2 ou 3, **caractérisée en ce que** la broche de guidage (6) est configurée séparément du boîtier (2) et y est insérée.

6. Fiche de bougie de préchauffage (1) selon l'une des revendications précédentes, **caractérisée en ce que** la fiche de bougie de préchauffage (1) est réalisée sous la forme d'une pièce moulée par injection en matière plastique.
